# EUROPÄISCHE PATENTSCHRIFT

(11) **EP 0 714 176 B1**
(45) Veröffentlichungstag und Bekanntmachung des Hinweises auf die Patenterteilung: **08.05.2002**
(21) Anmeldenummer: 95203103.7
(22) Anmeldetag: 14.11.1995
(51) Int. Cl.: H04B 1/38

(54) **Funkfeststation**
Base station
Station de base

(30) Priorität: 23.11.1994 DE 4441621
(43) Veröffentlichungstag der Anmeldung: 29.05.1996
(73) Patentinhaber: LUCENT TECHNOLOGIES INC., Murray Hill, New Jersey 07974-0636 (US)
(72) Erfinder: Göbel, Hermann, c/o Philip, D-22335 Hamburg (DE)
(74) Vertreter: Buckley, Christopher Simon Thirsk

(56) Entgegenhaltungen:
- EP-A- 0 596 727
- US-A- 4 694 484

## Beschreibung

Die Erfindung bezieht sich auf eine Funkfeststation mit einem Schrank zur Aufnahme mindestens einer ein Netzgerät aufweisenden Sende-Empfangseinheit und einer zur Absicherung und Filterung der ankommenden Netzspannung dienenden Vorschalteinheit, welche ausgangsseitig über Versorgungsleitungen mit den Netzgeräten der Sende-Empfangseinheit verbunden ist.

Derartige Funkfeststationen sind z.B. für den Einsatz in digitalen Mobilfunknetzen vorgesehen. Diese Stationen enthalten je nach den gegebenen Anforderungen mehr oder weniger Sende-Empfangseinheiten, deren Netzgeräte von der Vorschalteinheit entweder mit Gleich- oder mit Wechselspannungen versorgt werden. Da die Sende-Empfangseinheiten durchweg mit Gleichspannungen in verschiedenen Höhen versorgt werden, erfolgt bei einer Speisung mit Gleichstrom lediglich eine Teilung der angelieferten Gleichspannung, während bei einer Versorgung mit Wechselspannung diese zunächst gleichgerichtet und dann geteilt wird. Bei den bisher bekannten Funktfeststationen ist die die Versorgungsspannungen liefernde Vorschalteinheit fest in den Schrank eingebaut und verdrahtet.

US 4 694 484 offenbart eine Funkfeststation mit modularen Aufbau gemäß dem Stand der Technik.

Eine derartige Funkfeststation kann entweder mit Gleichspannung oder mit Wechselspannung oder in einem Mischbetrieb mit Gleich- und Wechselspannung betrieben werden. Im Falle einer Störung, z.B. eines Spannungsausfalles, fielen bisher sämtliche Sende-Empfangseinheiten der Funkstation aus, und es waren langwierige Reparatur- und Umrüstarbeiten bei der Vorschalteinheit erforderlich, um z.B. bei Ausfall der einen Spannungsart auf die andere Spannungsart überzugehen.

Der Erfindung liegt die Aufgabe zugrunde, die Einsatzmöglichkeiten, d.h. die Flexibilität, einer derartigen Funkfeststation zu erhöhen und im Falle einer Störung in der Spannungsversorgung den Arbeitsaufwand zu vermindern.

Diese Aufgabe wird gemäß der Erfindung bei einer Funkfeststation der eingangs genannten Art dadurch gelöst, daß das Vorschaltgerät in Form mindestens eines Einschubmoduls ausgebildet ist und daß die Netzleitungen über Anschlußklemmen und die ausgangsseitigen Versorgungsleitungen über je einen Steckverbinder anschließbar sind. Ein derartiges Einschubmodul kann, z.B. bei Wechsel der Spannungsart, mit wenigen Handgriffen ausgetauscht werden. Gleiches gilt im Falle einer Störung eines Bauelementes auf einem derartigen, als Einschubmodul ausgebildeten Vorschaltlgerät. Somit können lang andauernde Ausfälle einer Funkstation bei einer Störung vermieden werden. Des weiteren ergibt sich der Vorteil, daß ohne großen Verdrahtungsaufwand eine variable Bestückung des Feststation mit Vorschalteinheiten durchgeführt werden kann.

In Ausgestaltung der Erfindung ergibt sich ein leichter Ein- und Ausbau dadurch,
- daß die Bauteile eines Einschubmoduls auf einem mit einer Grundplatte versehenen Chassis angeordnet sind,
- daß der das Modul aufnehmende Schrankboden mit seitlichen Führungselementen für die Grundplatte versehen ist,
- daß das Chassis mit einer in eine Aufnahme des Schrankes eingereifenden Zunge versehen ist und
- daß das Chassis nach dem Einschieben über eine einzige Schraube im Schrank festlegbar ist.

Diese Bauweise ermöglicht mit wenigen Handgriffen ein Lösen und Herausziehen bzw. Einschieben und Festlegen des Einschubes. Die Führungen auf dem Schrankboden gewährleisten eine eindeutige Schubrichtung, und die Zunge am Ende des Chassis bewirkt eine Arretierung, so daß eine einzige Schraube zum Festlegen des Einschubmoduls ausreicht.

In einer weiteren Ausgestaltung der Erfindung ist vorgesehen, daß mindestens zwei Einschubmodule vorgesehen sind, deren ausgangsseitige Versorgungsleitungen über je einen Steckverbinder an ein Einschubmodul anschließbar sind und deren Eingänge wahlweise wie folgt mit dem Netz verbindbar sind:
a) Beide Module liegen an Gleichspannung,
b) beide Module liegen an Wechselspannung, oder
c) ein Modul liegt an Gleich-, und das andere Modul liegt an Wechselspannung.

Bei einer derartigen Bestückung der Funkfeststation mit mindestens zwei Einschubmodulen können von jedem Modul gesonderte Sende-Empfangseinheiten mit Spannungen versorgt werden. Für den Fall, daß bei einer Störung in dem einen Modul die angeschlossenen Sende-Empfangsenheiten ausfallen, bleiben dann die an das andere Modul angeschlossenen Sende-Empfangseinheiten betriebsbereit. Desgleichen ergibt sich damit die Möglichkeit, einen Teil der im Schrank angeordneten Sende-Empfangseinheiten mit Gleich- und den anderen Teil mit Wechselspannung zu versorgen. Für den Fall, daß z.B. dann die Wechselspannung ausfällt, bleiben die an die Gleichspannung angeschlossenen Sende-Empfangseinheiten betriebsbereit, so daß die Funktfeststation nicht voll ausfällt.

In der Zeichnung sind in den Fig. 1 bis 5 Ausführungsbeispiele des Gegenstandes gemäß der Erfindung schematisch dargestellt.
Fig. 1 und 2 zeigen jeweils die Vorderfront einer Funkfeststation mit jeweils verschiedener Bestückung,
Fig. 3 zeigt eine Vorderansicht von zwei in einen Schrank eingebauten Einschubmodulen,
Fig. 4 zeigt eine Seitenansicht eines Moduls gemäß Fig. 3, und
Fig. 5 zeigt eine Draufsicht gemäß Fig. 4.

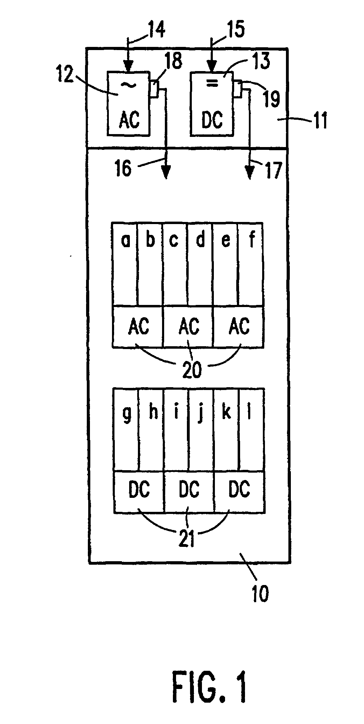

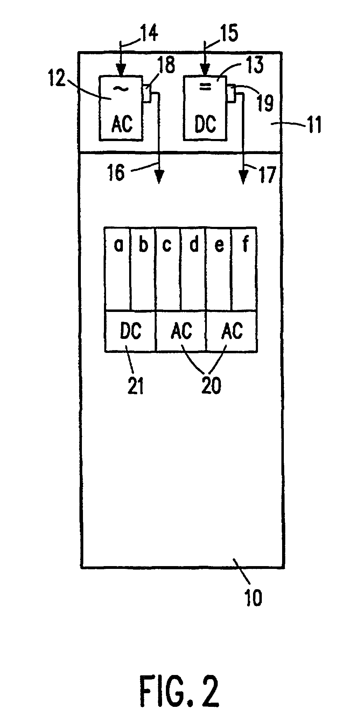

Gemäß Fig. 1 und 2 besitzen die Funkfeststationen einen Schrank 10 mit einem oberen Schrankfach 11, in welchem jeweils zwei als Vorschaltgeräte dienende Einschubmodule 12 und 13 angeordnet sind. Das Einschubmodul 12 (AC-Modul) wird dabei jeweils mit Wechselstrom und das Einschubmodul 13 (DC-Modul) mit Gleichstrom betrieben. Die Anschlußklemmen für die Netzwechselspannung sind mit 14 und die Anschlußklemmen für die Netzgleichspannung mit 15 bezeichnet. Die beiden Vorschaltgeräte 12, 13 weisen ausgangsseitig Versorgungsleitungen 16, 17 auf, die über Steckverbinder 18, 19 mit den Vorschaltgeräten 12, 13 verbindbar sind.

Im unteren Teil des Schrankes 10 gemäß Fig. 1 sind zwölf Sende-Empfangseinheiten a bis 1 angeordnet, denen jeweils Netzgeräte 20, 21 zugeordnet sind. Dabei werden die Netzgeräte 20 für die Sende-Empfangseinheiten a bis f mit Wechselstrom aus der Versorgungsleitung 16 und die Netzgeräte 21 mit Gleichstrom aus der Versorgungsleitung 17 versorgt.

Gemäß Fig. 2 sind im unteren Teil des Schrankes 10 nur sechs Sende-Empfangseinheiten a bis f vorgesehen, wobei das Netzgerät 21 für die Sende-Empfangseinheiten a und b mit Gleichstrom aus der Versorgungsleitung 17 und die Netzgeräte 20 für die Sende-Empfangseinheiten c bis f mit Wechselstrom aus der Versorgungsleitung 16 versorgt werden.

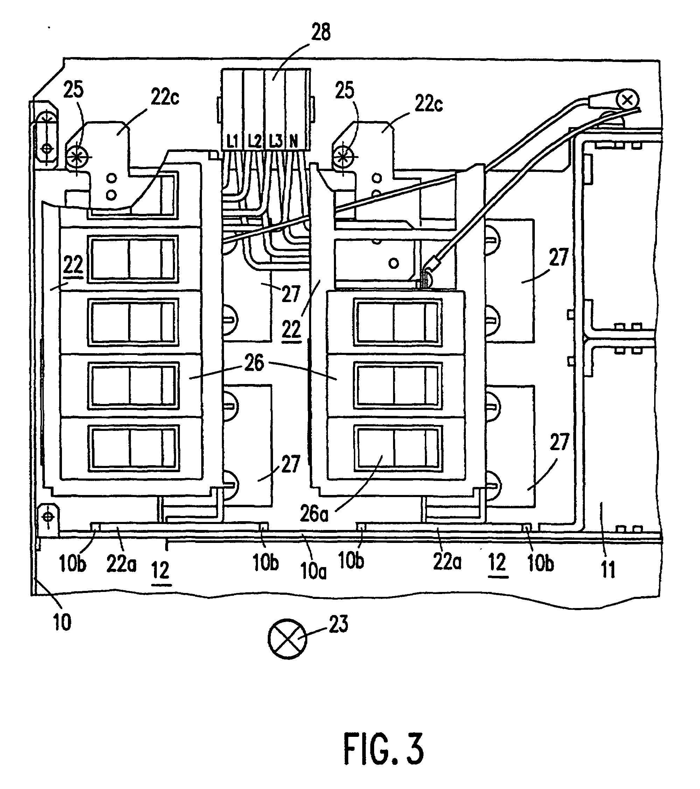

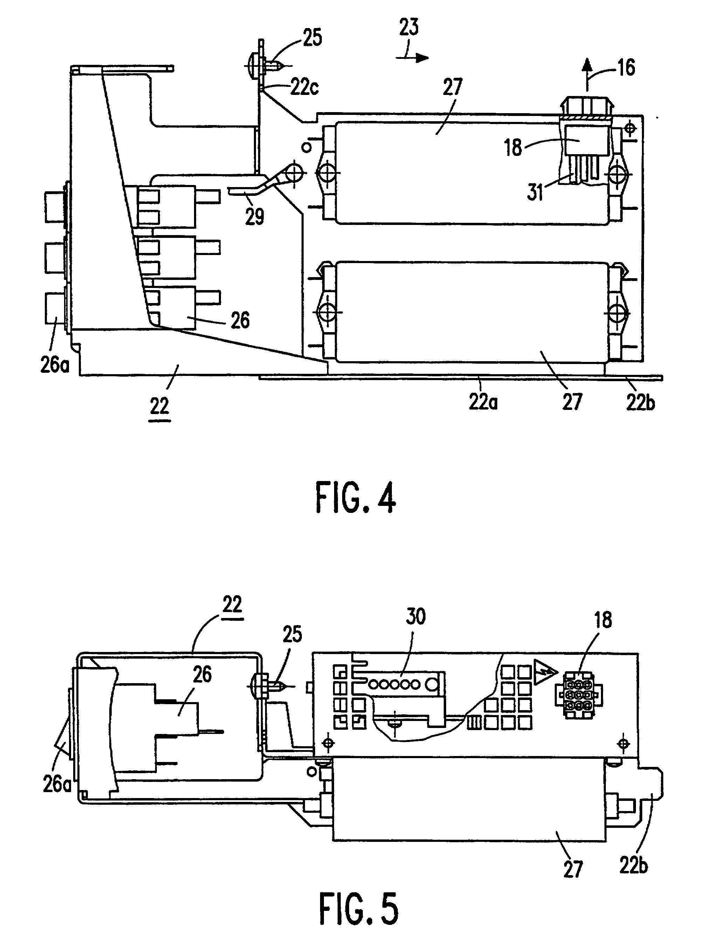

Fig. 3 zeigt in vergrößerter Darstellung die Vorderansicht von zwei in ein Fach 11 eingeschobenen AC-Modulen 12. Gemäß Fig. 3 bis 5 besitzt jedes Einschubmodul 12 ein Chassis 22 zur Aufnahme aller der Absicherung und Filterung der Netzspannung dienenden Bauteile. Das Chassis steht mit einer Grundplatte 22a auf einem Gehäuseboden 10a und wird in Einschubrichtung 23 durch zwei auf dem Gehäuseboden 10a angebrachte Führungsleisten 10b geführt. Mit 22b ist eine Zunge bezeichnet, die in eingeschobenem Zustand in eine nicht dargestellte Öffnung des Gehäuses 10 eingreift und somit das Modul gegen Verschieben sichert. Im eingeschobenen Zustand wird das Modul durch eine an einer Lasche 22c angebrachte Befestigungsschraube 25 im Schrank festgelegt. Mit 26 sind Sicherungen bezeichnet, die durch Wippschalter 26a betätigt werden können. Mit 27 sind Netzfilter und mit 28 Netzanschlußklemmen bezeichnet. Mit 29 ist ein Masseanschluß und mit 30 eine Verteilerleiste für Neutralleiter bezeichnet. Am Ende des Einschubmoduls ist ein Klemmverbinder 18 angeordnet, der über eine innere Verkabelung 31 mit Bauteilen des Moduls verbunden ist und über steckbare Versorgungsleitungen 16 mit den im Schrank 10 angeordneten Netzgeräten 20 für die Sendeeinheiten a bis f bzw. c bis f verbindbar ist.

## Patentansprüche

1. Funkfeststation mit einem Schrank (10) zur Aufnahme mindestens einer ein Netzgerät (20, 21) aufweisenden Sende-Empfangseinheit (a bis l) und eines zur Absicherung und Filterung der ankommenden Netzspannung dienenden Vorschaltgerätes, welches ausgangsseitig über Versorgungsleitungen (16, 17) mit den Netzgeräten (20, 21) der Sende-Empfangseinheiten verbunden ist, **dadurch gekennzeichnet, daß** das Vorschaltgerät in Form mindestens eines Einschubmoduls (12, 13) ausgebildet ist und daß die Netzleitungen (L₁, L₂, L₃ N) über Anschlußklemmen (28) und die ausgangsseitigen Versorgungsleitungen (16, 17) über je einen Steckverbinder (18, 19) anschließbar sind.

2. Funkfeststation nach Anspruch 1, **dadurch gekennzeichnet, daß** mindestens zwei Einschubmodule (12, 13) vorgesehen sind, deren ausgangsseitige Versorgungsleitungen (16, 17) über je einen Klemmverbinder (18, 19) an eines der Anschlußmodule (12, 13) anschließbar sind und deren eingangsseitige Anschlußklemmen (28) wahlweise wie folgt mit dem Netz verbindbar sind:
a) Beide Module (12, 13) liegen an Gleichspannung (DC-Module),
b) beide Module (12, 13) liegen an Wechselspannung (AC-Module),
c) ein Modul liegt an Gleichspannung (DC-Modul), und das andere Modul liegt an Wechselspannung (AC-Modul).

3. Funkfeststation nach Anspruch 1 oder 2, **dadurch**
**gekennzeichnet,**
- **daß** alle Bauteile (26, 27) eines Moduls (12, 13) auf einem mit einer Grundplatte (22a) versehenen Chassis (22) angeordnet sind,
- **daß** der die Module (12, 13) aufnehmende Schrankboden (10a) mit seitlichen Führungsschienen (10b) für die Grundplatte (22a) versehen ist,
- **daß** das Chassis (22) mit einer in eine Aufnahme des Schrankes (10) angreifenden Zunge (22b) versehen ist und
- **daß** das Chassis (22) nach dem Einschieben über eine einzige an einer Lasche (22c) angeordnete Befestigungsschraube (25) am Schrank (10) festlegbar ist.

## Claims

1. Fixed radio station having a cabinet (10) for holding at least one transmitting/receiving unit (a to 1), which has a power supply unit (20, 21) and one input unit, which is used for protection and for filtering the incoming power supply voltage and is connected on the output side via supply lines (16, 17) to the power supply units (20, 21) for the transmitting/receiving units, **characterized in that** the input unit is in the form of at least one withdrawable module (12, 13), and **in that** the power supply lines (L₁, L₂, L₃ N) can be connected via connecting terminals (28), and the output-side supply lines (16, 17) can be connected via a respective plug connector (18, 19).

2. Fixed radio station according to Claim 1, **characterized in that** at least two withdrawable modules (12, 13) are provided, whose output-side supply lines (16, 17) can be connected via a respective terminal connector (18, 19) to one of the connecting modules (12, 13), and whose input-side connecting terminals (28) can optionally be connected to the power supply as follows:
a) both modules (12, 13) are connected to a DC voltage (DC modules),
b) both modules (12, 13) are connected to an AC voltage (AC modules),
c) one module is connected to a DC voltage (DC module), and the other module is connected to an AC voltage (AC module).

3. Fixed radio station according to Claim 1 or 2,
**characterized**
- **in that** all the components (26, 27) in one module (12, 13) are arranged on a chassis (22), which is provided with a base plate (22a),
- **in that** the cabinet base (10a) which accommodates the modules (12, 13) is provided with side guide rails (10b) for the base plate (22a),
- **in that** the chassis (22) is provided with a tongue (22b) which engages in a holder in the cabinet (10), and
- **in that**, after insertion, the chassis (22) can be fixed to the cabinet (10) via a single attachment screw (25), which is arranged on a lug (22c).

## Revendications

1. Station de base comportant une armoire (10) pour recevoir au moins une alimentation secteur (20, 21) présentant un module d'émission/réception (a à
1) et un régulateur de puissance servant à protéger et à filtrer la tension secteur arrivant, dont les sorties sont reliées aux alimentations secteur (20, 21) des modules d'émission/réception par le biais de câbles d'alimentation (16, 17), **caractérisée en ce que** le régulateur de puissance est réalisé sous la forme d'au moins un module enfichable (12, 13) et que les câbles secteur (L₁, L₂, L₃, N) peuvent être raccordés par le biais de bornes de raccordement (28) et les câbles d'alimentation côté sortie (16, 17) peuvent chacun être raccordés par le biais d'un connecteur (18, 19).

2. Station de base selon la revendication 1, **caractérisée en ce qu'**au moins deux modules enfichables (12, 13) sont prévus dont les câbles d'alimentation côté sortie (16, 17) peuvent chacun être raccordés par le biais d'un connecteur (18, 19) à l'un des modules de raccordement (12, 13) et leurs bornes de raccordement côté entrée (28) peuvent être reliées au secteur au choix, de l'une des manières suivantes :
a) Les deux modules (12, 13) sont reliés à la tension continue (modules CC),
b) Les deux modules (12, 13) sont reliés à la tension alternative (modules CA),
c) Un module est relié à la tension continue (module CC) et l'autre module est relié à la tension alternative (module CA).

3. Station de base selon la revendication 1 ou 2, **caractérisée en ce**
- **que** tous les composants (26, 27) d'un module (12, 13) sont disposés sur un châssis (22) muni d'une plaque de base (22a),
- **que** le fond de l'armoire (10a) qui reçoit les modules (12, 13) est muni de rails de guidage latéraux (10b) pour la plaque de base (22a),
- **que** le châssis (22) est muni d'une languette (22b) qui s'introduit dans une encoche de l'armoire (10) et
- **que** le châssis (22) peut être bloqué sur l'armoire (10) après avoir été enfiché à l'aide d'une vis de fixation (25) unique disposée sur une éclisse (22c).
